# EUROPEAN PATENT SPECIFICATION

(11) **EP 4 142 976 B1**
(45) Date of publication and mention of the grant of the patent: **15.07.2026**
(21) Application number: 21797101.9
(22) Date of filing: 27.04.2021
(51) Int. Cl.: B23K 15/00, B23K 15/04, B23K 15/10, B23K 101/12, B23K 103/04

(54) **JOINING METHOD TO PERFORM DEFECT-FREE, ELECTRON BEAM WELDS USING A SLOPE-OUT TECHNIQUE**
VERBINDUNGSVERFAHREN ZUR DURCHFÜHRUNG FEHLERFREIER ELEKTRONENSTRAHLSCHWEISSUNGEN MITTELS EINER NEIGUNGSBESEITIGUNGSTECHNIK
PROCÉDÉ D'ASSEMBLAGE POUR RÉALISER DES SOUDURES PAR FAISCEAU D'ÉLECTRONS SANS DÉFAUT À L'AIDE D'UNE TECHNIQUE D'INCLINAISON VERS L'EXTÉRIEUR

(30) Priority: 28.04.2020 US 202063016934 P; 03.03.2021 US 202117191293
(43) Date of publication of application: 08.03.2023
(73) Proprietor: Electric Power Research Institute, Inc., Palo Alto, CA 94304-1338 (US)
(72) Inventor: DUTILLEUL, Thomas, Sheffield, Brunel Way, Catcliffe Rotherham S60 5WG (GB)
(74) Representative: Marks & Clerk LLP
(86) International application number: PCT/US2021/029415
(87) International publication number: WO 2021/222259

(56) References cited:
- FR-A1- 2 361 968
- JP-A- H03 281 071
- US-A- 3 378 670
- US-A- 4 229 639
- US-B2- 7 091 444

## Description

### BACKGROUND OF THE INVENTION

### Field of the Invention

The invention, including its various embodiments, relates to electron beam welding and methods for eliminating the keyhole at the termination of the welding process. In particular, the invention, including its various embodiments, relates to methods for adjusting certain parameters in the electron beam welding process at the end of the weld used to join two parts or components to close the keyhole and provide a completed weldment with minimal or no defects.

### Description of Related Art

Electron beam welding (EBW) has the potential to dramatically reduce the welding time for joining thick section components, such as pressure-retaining components that are used in equipment that hold fluids under pressure, such as pressure vessels. These components have thick sections or thick walls to provide the necessary strength to hold fluids under pressure and, accordingly, require welding or joining of these thick section components. In some embodiments, these thick section components are circular and require a circumferential weld, such as in the manufacture of pressure vessels. EBW is capable of joining approximately 8 inches (200 mm) thick material in a single welding pass while significantly reducing the overall time required for joining the two components. Accordingly, EBW is an attractive welding method for joining such materials.

However, during welding the concentrated electron beam used in EBW penetrates the substrate material forming a keyhole, which is a hole in the material being welded located at the leading edge of the weld pool. This keyhole is present throughout the welding process, including up to the point of termination of the weld. For a linear or a circumferential (pipe or shell) weld, the result would be a keyhole at the end of the weldment (essentially a hole through workpiece), which is not acceptable, particularly in the case of pressure-retaining components.

Further, in some cases, EBW results in flaws within the weldment that will subsequently require repair, particularly flaws near the keyhole. In the context of large pressure-retaining components that typically have thicker walls, the existence of such flaws reduces the attractiveness of EBW for welding such components, particularly in light of safety concerns when using high pressure-retaining equipment, such as pressure vessels.

Accordingly, there is a need for an EBW method that closes the keyhole at the termination of the welding process and that produces a weldment with minimal to no defects, particularly in the area where the keyhole is closed. In particular, there is a need for such a welding process for pressure-retaining components, such as pressure vessels, that require circumferential welding of thick section components.

FR2361968A1, on which the preamble of the independent claims is based, describes a method for producing an elongated weld seam in a workpiece by the use of a beam of charged particles, in particular an electron beam. A beam of charged particles is directed to impinge on a workpiece and has a selected beam current, a selected accelerating voltage and is focused by a focusing field of a selected field strength. In order to produce a weld seam there is provided a relative motion between the charged particle beam and the workpiece, to move the point of impingement along the workpiece. The relative motion has a predetermined selected instantaneous velocity. The depth of penetration of the charged particle beam into the workpiece is varied by changing a parameter selected from the group consisting of the beam current and the velocity of relative motion. Simultaneous with the changing of the depth of penetration, there is provided an active control to change at least one parameter selected from a second group consisting of the strength of the focusing field, the amplitude of periodic beam deflection in a direction parallel or transverse to the path of the relative motion and the frequency of periodic beam deflection in a direction parallel or transverse to the relative motion.

US7091444B2 describes a process for reducing end crater formation at the end of a weld seam during laser beam welding. Towards the seam end the focus of the laser beam is distanced from the surface to be welded and/or a transverse movement of the beam occurs.

### BRIEF SUMMARY OF THE INVENTION

In general, the present invention is directed to electron beam welding (EBW) and methods for eliminating the keyhole at the termination of the welding process used to join two parts or components. In particular, the invention, including its various embodiments, relates to methods for adjusting the welding parameters near the end of the welding process to close the keyhole and provide a weldment having minimal to no defects or embedded defects, such as porosity including spiking porosity particularly in the area where the keyhole was closed. The present invention provides a modification to the EBW process, which is referred to as a "slope-out methodology," that results in the formation of a "slope-out portion" located generally in that region of the overall weldment located at the end of the ordinary EBW welding process. The slope-out portion overlaps with the initial weld of the workpiece for a given distance or length along the weld and effectively fills in the keyhole and completes the weldment and provides a weldment that has minimal to no defects, particularly in the slope-out portion. The slope-out methodology may be used in linear or circumferential welding with EBW and is particularly useful in welding thick components.

The slope-out portion of the weld is created by using the slope-out methodology, which generally begins near the end of the overall welding process or near the end of a complete initial weld. Prior to the start of the slope-out methodology, the workpiece is being welded in a steady-state manner with the electron beam focal position or focal plane located within the bulk of the material being welded (*i.e.*, the beam is under-focused or negatively defocused) and the electron beam parameters being held constant. The slope-out methodology begins by adjusting various parameters related to the electron beam to essentially decay the beam and form a weld that overlaps the initial weld. In some embodiments, the slope-out methodology includes modifying the beam focus position so that it evolves or changes with the slope-out distance or as the slope-out methodology proceeds, which can be either a linear or a curved relationship and which can be continuous through the slope-out methodology. According to the present invention, the focus position of the electron beam is moved from under-focused or negatively defocused (focal position in the bulk of the material as per steady-state welding) to over-focused or positively defocused (focal position outside of the workpiece outer surface) as the overlapping weld is made. In addition and according to the present invention, at the start of the slope-out methodology or as the focal position of the electron beam is being changed from under-focused to over-focused (or from negative to positive), the electron beam oscillation pattern may also be changed. In some embodiments, the oscillation pattern is widened. The slope-out methodology continues for a pre-determined amount of time or until a pre-determined length of overlapping weld is formed, at which point the keyhole has been closed and both the overall welding process and the slope-out methodology are complete.

The present invention provides a method for closing the keyhole formed by EBW and producing a weld without resulting flaws in the slope-out region. This allows the present invention to be used to not only join two components or parts, but to join thick components, such as thick section cylindrical components in a single welding pass. Accordingly, the lack of flaws reduces or eliminates any re-work, which would otherwise negatively impact the gains produced by welding in a single pass.

### BRIEF DESCRIPTION OF THE SEVERAL VIEWS OF THE DRAWINGS

Figure 1 shows a reactor pressure vessel that has been welded using EBW;
Figure 2A illustrates a workpiece and an electron beam welder in a 2G welding orientation according to one embodiment of the invention;
Figure 2B illustrates a keyhole in EBW;
Figure 3 is a flowchart illustrating the slope-out methodology as part of an overall EBW process according to one embodiment of the present invention;
Figure 4 illustrates the effect of changing the electron beam defocusing on the keyhole shape;
Figure 5 illustrates the results of focusing trials produced with the lens focus position evolving linearly during the slope-out methodology;
Figure 6 illustrates photographs comparing the visual appearance of the welds produced during slope-out for various defocusing trials of Figure 5;
Figure 7 illustrates photographs of longitudinal slices of the welds of Figure 6;
Figure 8A illustrates phased array ultrasonic inspection (PAUT) graphs for the slope-out welds of Figure 6;
Figure 8B illustrates the phased array ultrasonic inspection (PAUT) graphs for certain of the graphs of Figure 8A;
Figure 9 illustrates photographs comparing the visual appearance of the welds produced during degassing tests;
Figure 10 illustrates phased array ultrasonic inspection (PAUT) graphs for the slope-out welds of Figure 9;
Figure 11 illustrates photographs of longitudinal slices of the welds of Figure 9;
Figure 12 illustrates a photograph of the slope-out region of a full circumferential weld;
Figure 13 illustrates the phased array ultrasonic inspection (PAUT) graph of the slope-out weld of Figure 12 and a longitudinal slice of the weld of Figure 12;
Figures 14A and 14B illustrate the results from the additional experiments conducted using rings made from SA508 Grade 3;
Figure 15 illustrates the results from the second set of bead-on-plate trials;
Figures 16A and 16B show photographs of the ring welding setup for welding two 150 mm tall SA508 Grade 3, Class 1 forged rings (Test Ring Weld 1);
Figures 17A and 17B show photographs of the completed slope region of the weld from this welding of two 150 mm tall SA508 Grade 3, Class 1 forged rings (Test Ring Weld 1);
Figures 18A and 18B show ToFD inspection results from the slope-out region of Test Weld 1;
Figures 19A and 19B illustrate the PAUT scans for Test Weld 1;
Figure 20 shows the resulting weld of butting two 150 mm high sections of an SA508 Grade 3 Class 1 rings (Test Ring Weld 2);
Figure 21 shows a cosmetic welding pass applied to Test Ring Weld 2;
Figures 22A and 22B illustrate the set-up for the shell/flange weld;
Figures 23A and 23B show photographs of the completed weld and a close-up of the slope out area for the shell/flange weld;
Figure 24 shows the machine process trace for the shell/flange weld;
Figure 25 shows photographs of the DPI indications for the shell/flange weld;
Figure 26 shows the ToFD data from the shell/flange weld;
Figure 27 shows the PAUT results from the shell/flange weld; and
Figure 28 shows the phased array graph of the shell/flange weld.

### DETAILED DESCRIPTION OF THE INVENTION

In general, the present invention is directed to electron beam welding (EBW) and methods for eliminating the keyhole at the termination of the welding process used to join two parts or components. In particular, the invention, including its various embodiments, relates to methods for adjusting the welding parameters near the end of the welding process to close the keyhole and provide a weldment having minimal to no defects or embedded defects, such as porosity, including spiking porosity, particularly in the area where the keyhole was closed. The present invention provides a modification to the EBW process, referred to as a "slope-out" methodology or process, that results in the formation of a "slope-out portion" located generally in that region of the overall weldment formed at the end of the ordinary EBW welding process. In particular, the slope-out portion is basically a portion of the weldment made at the end of the welding process, including where the keyhole is located, that overlaps the weldment that was formed at the beginning of the welding process. Accordingly, the slope-out process occurs during a period of time near the end of the overall welding process, which is that point at which the weldment begins to overlap the weldment formed at the beginning of the overall welding process. Thereafter, both the slope-out process and the overall welding process can be considered to end concurrently.

According to the present invention, in circumferential welding the workpiece is rotated 360 degrees during the welding process. Once the workpiece has been rotated a full 360 degrees and welded about its entire circumference, the slope-out process begins and the slope-out portion is formed. The slope-out portion in this case would be that portion of the weldment that now overlaps with the initial portion of the weldment made at the beginning of the welding process when the workpiece was initially starting to turn. Accordingly, this slope-out portion extends over a given length or distance along the weld depending upon various parameters as described further below. This slope-out portion effectively fills in the keyhole and completes the weldment and provides a weldment that has minimal to no defects, particularly in the slope-out portion. Once the slope-out portion is formed as desired, the slope-out process ends, which is concurrent with the ending of the overall welding process.

The slope-out portion of the weld is created by using the slope-out methodology or process, which generally begins near the end of the overall welding process. In other words, the slope-out methodology is conducted near the end of the overall welding process, specifically at the point where the weld beings to overlap the initial weld and continues until the slope-out portion is completed. The slope-out process may be considered to be the last part of the overall welding process, as it is conducted at the end of the normal EBW welding process.

According to the present invention, prior to the start of the slope-out process, the workpiece is welded in a steady-state manner with the electron beam focal position or focal plane being within the bulk of the material being welded (*i.e.,* the beam is under-focused or negatively defocused) and the electron beam parameters being held constant. It should be appreciated that the precise focal position will be based on material and geometrical considerations and will form part of the steady-state welding procedures necessary to perform the weld. In general, and with reference to a circumferential weld, the slope-out process starts at the point where the workpiece has achieved a full rotation of 360 degrees, such that the steady-state weld has been completed around the entire circumference of the workpiece. The slope-out process then begins near or at the end of the formation of the initial 360-degree weldment. In other words, at the point where the beam is now overlapping the weld made at the beginning of the welding process (*i.e.,* at the start of rotation of the workpiece), the slope-out process is started.

The slope-out process begins by adjusting various parameters related to the electron beam to essentially decay the beam while continuing to rotate the workpiece and form a weld that overlaps the initial weld. The slope-out process continues for a pre-determined amount of time or until a pre-determined length of overlapping weld is formed, at which point the keyhole has been closed and both the overall welding process and the slope-out process are complete. In some embodiments, the slope-out portion may extend from 50.8 - 304.8 mm (2-12 inches) in length along the weld, depending upon the thickness of the workpiece and the time required to generate a flaw-free slope.

In some embodiments, the slope-out process includes modifying the lens focus position so that it evolves or changes with the slope-out distance or as the slope-out process proceeds. The change in the lens focus position can be either a linear or a curved relationship and can be continuous throughout the slope-out methodology or procedure. In other words, the rate of change of the lens focus position or the magnitude of defocus can be changed linearly at a constant rate or non-linearly at a varying rate as the slope-out methodology or slope-out welding proceeds. In general, during the slope-out process or as the overlapping weld or slope-out portion is made, the focus position of the electron beam is moved from under-focused or negatively defocused (focal position in the bulk of the material as per steady-state welding) to over-focused or positively defocused (focal position ahead of the workpiece surface). It should be appreciated generally that reference to an under-focused beam refers to the focal position being within the workpiece and reference to an over-focused beam refers to the focal position being off of the workpiece surface. Sharp focus refers to the focal position being at the workpiece surface.

In addition and according to the present invention, at the start of the slope-out process or as the focal position of the electron beam is being changed from under-focused to over-focused (or from negative to positive), the electron beam oscillation pattern is also changed. In some embodiments, the oscillation pattern is widened. In some embodiments, an elliptical oscillation pattern, elongated perpendicular to the weld direction, is used. In this case the elliptical pattern is further elongated at the start of the slope-out process. In some embodiments, the elliptical oscillation pattern is elongated in both the perpendicular direction and in the direction of the weld. Such wider oscillation increases the size of the keyhole cavity and reduces or avoids formation of characteristic flaws such as spiking flaws. It should be appreciated, however, that such changes or modifications to the oscillation should avoid destabilizing the keyhole. Generally, it should also be appreciated that the magnitude of the defocus and the size of the oscillation will also depend on the beam geometry.

In general, successful slope-out conditions can be achieved depending upon the geometry of the workpiece, including, for example, the material thickness and radius/length, and the rate of change of focal position, with the final focal position, however, being a distance off the material surface. Successful slope-out conditions are also a function of, and derived from, the electron gun geometry, beam geometry, beam current, beam accelerating voltage, and working distance.

The slope out procedure is achieved by balancing three key factors or beam characteristics that occur simultaneously during the slope-out process. First the beam current is continuously reduced during the slope out region, which effectively reduces the beam power resulting in the weld transitioning from a fully penetrating weld to a partial penetration weld. Second, the focal position of the beam is manipulated from being located within the bulk of the material for steady-state welding (under-focused) to being located above the workpiece surface (over-focused). The over-focused beam is required to control the partial penetration weld. Third, the beam oscillation is manipulated from a horizontal oscillation (parallel to beam direction) to a vertical oscillation (perpendicular to the beam direction). This oscillation counteracts the sharpening of the electron beam profile as a result of the reduction in beam power that is occurring during slope-out. This oscillation is also used to avoid 'spiking' type defects.

In all cases, the material or workpiece response to the change in beam characteristics has some inherent inertia. Therefore, the rate of change of these key parameters (beam current, focal position, and beam oscillation) needs to occur over a sufficiently long time period to ensure that defects are not being 'frozen' into the material as a result of rapid solidification. The length of time is dependent on the welding conditions (*e.g*., length and speed of the weld) and the material characteristics (*e.g*., solidification range, boiling point of the main element). In some embodiments, generating a slope-out that is approximately ten times the weld thickness provides sufficient time for the melt pool flow to accommodate to the changes. In some embodiments, generating a slope-out that is less than ten times the weld thickness may be sufficient. For example, if large pores are trapped, this would indicate that the time period is too short. Alternatively, if large pores are not trapped, then the time period, then it may be possible to reduce the time period. Accordingly, conducting the slope-out process to allow the material to equilibrate will provide a better weld. Ensuring the material has time to equilibrate during the slope-out process means that either the length of the slope-out portion or region needs to be sufficiently long (*e.g.,* a fixed welding speed) or the welding speed is decreased during the slope-out process.

Accordingly, the time required for the slope-out process, as determined by either the length of weld or welding speed adjustments, can be determined iteratively, for example by using NDT techniques as a guide to weld quality. It should be appreciated, however, that longer lengths or slower weld speeds favor defect free slope outs. Also, it should be appreciated that as the thickness of the workpiece increases, the time required for the slope-out process should similarly be extended. This would be achieved by either extending the length of the slope-out portion or region or by reducing the weld speed during the slope-out portion or region.

It should be appreciated that many different workpieces may be welded using EBW and the methods of the present invention described herein, with the present invention being particularly well suited for circumferential welding. It should be appreciated that the present invention can be used in welding of various materials with various thicknesses, referred to as thick section welding. It should also be appreciated that the methods of the present invention may be used when welding workpieces having various materials of construction. For example, in some embodiments, the workpiece may be carbon steel, low alloy steel, nickel steel , or stainless steel. In some embodiments, the material of construction or composition of the workpiece will determine the steady-state electron beam welding conditions and the slope-out process conditions would then be determined as described above starting from the steady-state welding conditions. The physical properties of the workpiece, however, can be used to assist in determining the slope-out process conditions. For example, materials like nickel alloys have a more viscous melt pool and flow effectively less well. In such embodiments, the slope-out process may be slowed, for example, by forming a longer slope-out portion or region. The solidification range of the workpiece composition is another factor that can be used. For example, a material that solidifies more quickly would have more tendency for pore entrapment. In such embodiments, the slope-out process could be implemented to similarly form a longer slope-out portion or region. A material with a relatively faster solidification would, however, be beneficial for bead stability.

It should also be appreciated that the methods of the present invention can be implemented without the need for additional equipment or components other than what is typically used in EBW. In other words, the methods of the present invention may be used with an existing electron beam welder and its various components, including a focusing lens or magnetic lens and deflection system and whether such is magnetic or implemented by moving the workpiece, but without the use of additional equipment or components added to the electron beam welder. In other words, the methods of the present invention may be implemented by adjusting the welding parameters, including defocusing, without the need for additional components or equipment for otherwise altering the operation of the electron beam welder.

Following, the accompanying figures are discussed along with additional details of the methods of the present invention. The following description provides information on the identification of those parameters that are useful in implementing the methods of the present invention to achieve a defect-free electron beam slope-out. In addition, results from various experimental tests are provided that demonstrate the methods of the present invention and illustrate the identification of the parameters useful in implementing the methods of the present invention.

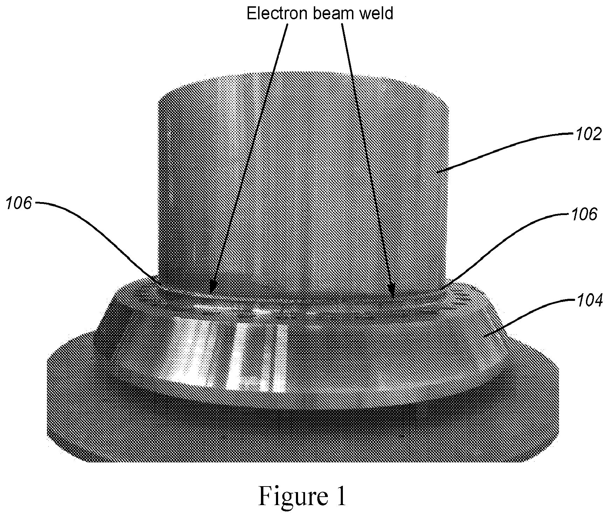

Figure 1 shows a reactor pressure vessel that has been welded using EBW according to one embodiment of the invention. The reactor pressure vessel 102 is welded to a flange 104. The weld 106 is a circumferential weldment created using EBW. This illustrates an example of a workpiece that has been welded using EBW. It should be appreciated that many different workpieces may be welded using EBW and the methods of the present invention described herein, with the present invention being particularly well suited for circumferential welding. It should also be appreciated that the use of EBW and the methods of the present invention are in some embodiments particularly suited for welding thick materials, such as materials that have a thickness of approximately 25-200 mm (1-8 inches) or more. In some embodiments, the methods of the present invention are particularly suited for welding components used in equipment that operates under pressure or that has pressure-retaining thick section components.

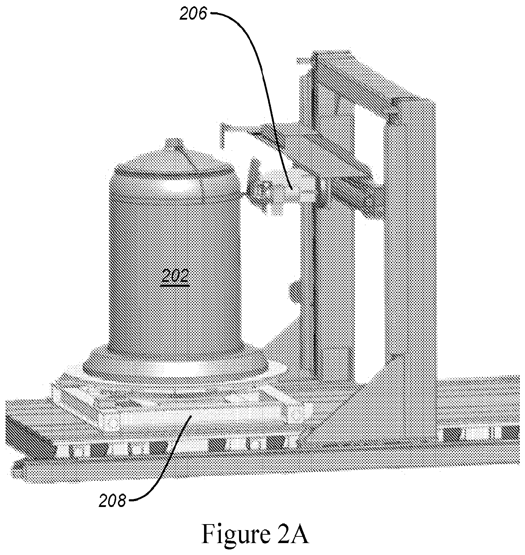

Figure 2A illustrates a workpiece and an electron beam welder in a 2G welding orientation according to one embodiment of the invention. As shown, the workpiece 202, which may be a reactor pressure vessel having thick section components to be welded, is oriented vertically to allow for welding. The electron beam welder 204 is oriented horizontally and includes an electron beam head 206 and a rotator 208. This orientation of the workpiece 202 and the electron beam welder 204 is a 2G orientation and is useful in circumferential welding or in which the workpiece is rotated 360 degrees during steady-state welding. It should be appreciated that in this orientation, the workpiece is rotated, and the electron beam welder is stationary during welding. It should be appreciated that use of EBW with the methods of the present invention are not necessarily limited to the use of a 2G welding position, as other orientations or positions of the workpiece relative to the electron beam welder can be used with the methods of the present invention.

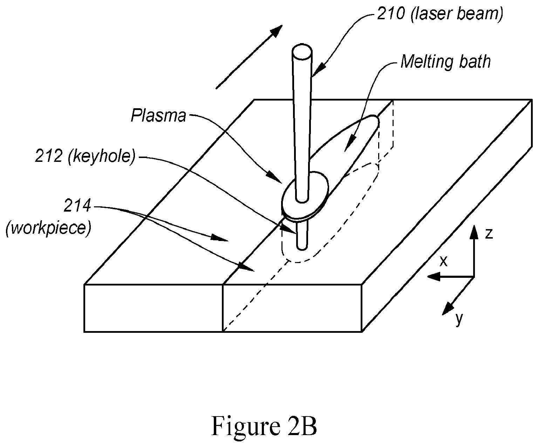

Figure 2B illustrates a keyhole that is formed in an EBW process. As shown, an EBW process is used to join the workpieces 214. The EBW process forms a plasma 216 resulting in the formation of the melting bath 218. The EBW process causes the formation of a keyhole 212 in the workpieces 214 being joined. The keyhole 212 is an opening in the workpieces 214 and is what is closed or filled-in by the slope-out methodology of the present invention.

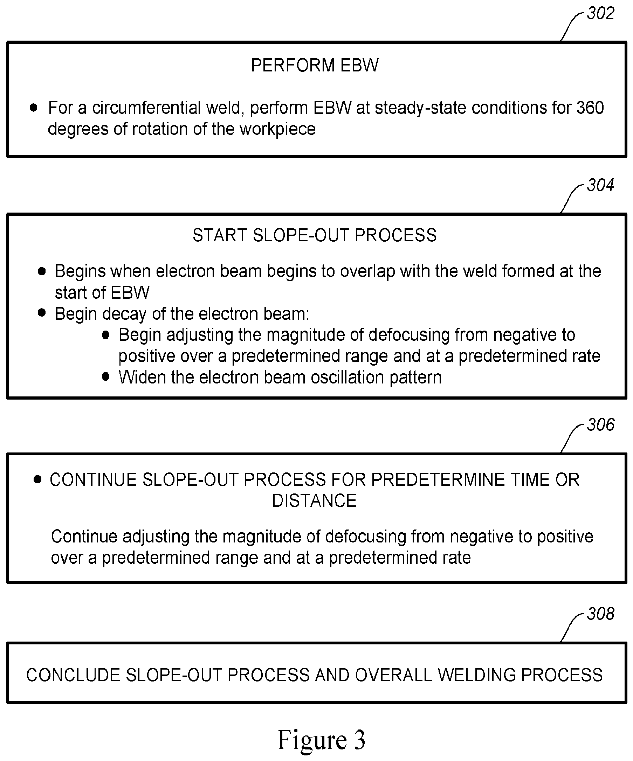

Figure 3 is a flowchart illustrating the slope-out methodology as part of an overall EBW process according to one embodiment of the present invention. Although the slope-out methodology can be used for either circumferential or linear welding, the following will be described in terms of circumferential welding. As noted above, the slope-out methodology begins near the end of the overall welding process. Accordingly, an EBW process would be initially performed 302. The EBW process would be performed at steady-state conditions, as determined by the materials being welded and the EBW equipment. To achieve a full circumferential weld the electron beam may be introduced into the material or workpiece with beam power increasing, which results in the initial creation of the keyhole. The beam welding parameters are then held essentially constant while the workpiece is rotated a full 360 degrees and welding continues around the entire circumference of the workpiece. It should be appreciated that in some cases the workpiece is rotated, and the electron gun (and thus the electron beam) is stationary or vice versa. Further, it should be appreciated that the precise focal position of the electron beam will be based on material and geometrical considerations and will form part of the steady-state welding procedures necessary to perform the weld. In some embodiments, the electron beam focal position is within the bulk of the material being welded or is under-focused.

Once completely rotated, the slope-out methodology would be started 304. As noted above, the slope-out methodology starts at the point where the weld has been made around the entire circumference of the workpiece. In other words, at the point where the electron beam is now beginning to overlap the weld made at the beginning of the steady-state welding process, the slope-out methodology is started.

The slope-out methodology begins 304 by adjusting various parameters related to the electron beam to essentially decay the beam while continuing to rotate the workpiece and form a weld that overlaps the initial weld. In general, the adjustments may be made to the magnetic focusing lens amplitude and to the beam oscillation amplitude. In some embodiments, the slope-out methodology includes modifying the lens focus position 306 so that it changes at either a linear or non-linear rate as the slope-out methodology proceeds. In general, the focus position of the electron beam is moved from under-focused or negatively defocused (focal position in the bulk of the material as per steady-state welding) to over-focused or positively defocused (focal position ahead of the workpiece surface or focus is at a higher level within the workpiece) as the overlapping weld is made. In addition, the electron beam oscillation pattern may also be changed 308. In some embodiments, the oscillation pattern is widened. In some embodiments, an elliptical oscillation pattern, elongated perpendicular to the weld direction, is used. In some embodiments, the elliptical oscillation pattern is elongated perpendicular to the weld direction and linearly in the direction of the weld. In this case the elliptical pattern is further elongated at the start of the slope-out methodology. Such wider oscillation increases the size of the keyhole cavity and reduces or avoids formation of characteristic flaws such as spiking flaws.

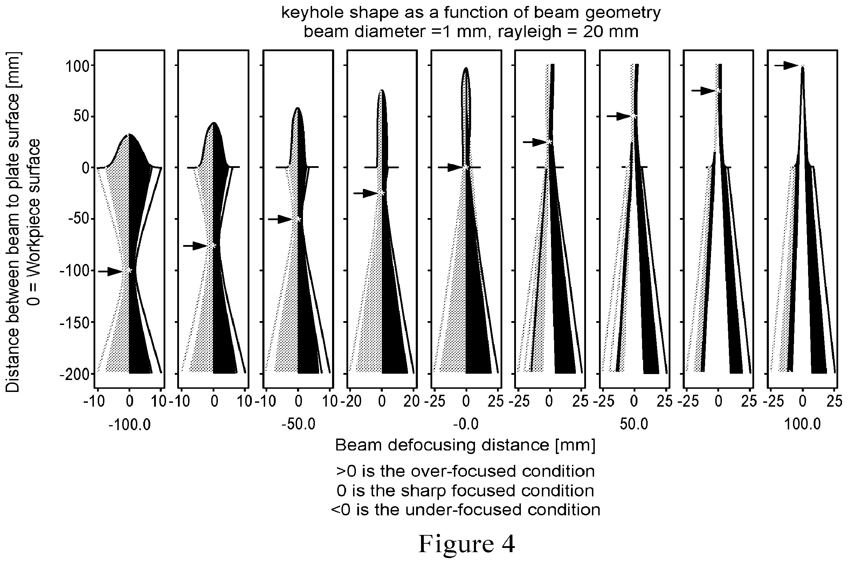

Figure 4 illustrates the effect of changing the electron beam defocusing on the keyhole shape. The x-axis (horizontal) is the defocus distance (mm) and ranges from -100 mm on the left side to 100 mm on the right side. The y-axis (vertical) is the distance between the electron beam and the surface of the workpiece. Each shape from left to right illustrates the keyhole shape for a beam diameter of 1 mm and rayleigh length of 20 mm. The horizontal arrows for each keyhole shape indicate the focal positions of the electron beam. For each shape, the lighter shaded portion on the left side shows the direction of the electrons and the darker shaded portion on the right side shows the contour lines of intensity. Figure 4 shows how the electron beam shape varies as the focal position is moved from under-focused at the start of the slope-out region (left side of Figure 4) to over-focused at the end of the slope-out region (right side of Figure 4).

Figure 4 shows clearly that more penetration is achieved through the use of an under-focusing position (reaching 100 mm in this case) as it demonstrates the most efficient use of the beam energy. This is what is desired for the initial weld, for example, around the entire circumference in a circumferential weld, with the ideal focus position being dependent on beam diameter and rayleigh length and material thickness and properties. Figure 4 also shows that a necking is created within the weld, which is to be avoided during the slope-out methodology. As the slope-out methodology begins, the beam is defocused such that the focus region is moved to a different level within the thickness of the workpiece that is higher relative to the workpiece or closer to the electron beam gun. In other words, the beam needs defocusing to a state of over-focusing for the full length of the slope-out. As a result, gas and porosity attendant to the porosity at that thickness level with the workpiece can be reduced or eliminated.

Returning to Figure 3, the slope-out methodology continues for a predetermined time as the workpiece continues to rotate or for a given distance to produce an overlapping weld having a given distance along the initial weld at the start of rotation of the workpiece. Again, the slope-out methodology is performed towards the end of the overall welding process at the point where the slope-out portion of the overall weldment begins to overlap with a previously made weld during the same overall welding process and continues until the slope-out portion is formed. For example, the overall welding process will take a given period of time, and the slope-out methodology will take a shorter period of time within the larger overall period of time for the overall welding process. The slope-out methodology time period, therefore, will overlap with same time period at the end of the overall welding process such that both time periods may end concurrently.

During this time period for the slope-out methodology, the defocusing of the electron beam lens continues based upon the desired rate and magnitude of defocusing to be achieved. Again, in general, the defocusing proceeds from under-focused to over-focused during the slope-out methodology. It should be appreciated that the length of the overlap (slope-out region) is dictated by the thickness of the component being welded. A thicker section may take a longer slope-out, while a thinner section may take a shorter slope-out.

Once the slope-out methodology has formed the overlapping weld for the desired distance along the initial weld or for the desired time during which the workpiece is rotated, both the slope-out methodology, as well as the overall welding process, would be completed 308. Accordingly, at this point, the weld is complete with no flaws, and the keyhole is closed.

In general, successful slope-out conditions are achieved per part geometry (material thickness and radius/length) based upon the rate of change of focal position, with the final focal position being a distance stood off the material surface. In addition, successful slope-out conditions are also a function of gun geometry, beam geometry, beam current, beam accelerating voltage, and working distance. Accordingly, different materials will weld differently, requiring different welding parameters. However, the slope-out methodology of the present invention can be used with any materials welded with EBW. It should be appreciated that in some embodiments, a material with higher heat conduction will have less penetration for the same power/speed. As such, a focus position more under-focused may be necessary than another material. Further, the rate of over-focusing during the slope-out methodology for that higher heat conduction material will need to be higher than for a lower heat conduction material.

It should be appreciated that the present invention can be used in welding various materials, including, for example, both wrought and hot isostatically pressed (HIP'ed) SA508 Grade 3 Class 1 and 2 steels, which may be used in thick section pressure vessels.

### Examples

Following are the results of several experiments conducted to evaluate the effects of various parameters on the slope-out methodology and the slope-out portion of the weldment. A 1960 mm (OD) x 80 mm (wall thickness) S355 (low carbon manganese steel) ring was used (see Figure 1 above). Weld parameters were developed using an elliptical electron beam oscillation (2x1 mm), elongated perpendicular to the weld direction, which produced a more stable weld than the same oscillation pattern elongated in the direction of the weld. A 100 mm long full penetration weld was followed by a 400 mm long slope out region. Welding parameters are presented in Table 1:

**Table 1. Welding Parameters**

| Parameters: | V (kV) | I (mA) | Speed (mm/s) | Electron Optical Monitoring (ELO) focus (mA) | Welding defocus (mA) | Slope end Defocus (mA) | Oscillation (mm/mm/Hz) |
|---|---|---|---|---|---|---|---|
| Welding | 60 | 450 | 2.00 | 2520 | -490 | -490+defocus | 2/1/501 |

For all trials, the steady-state welding current (up to the start of the slope-out methodology) was 450 mA, and the welding defocus was -490 mA, which effectively placed the focal point of the electron beam at a depth of 20 mm within the bulk of the material (from the outside diameter). During the slope-out methodology the welding current was reduced from the steady-state welding condition (450 mA) to 0 linearly over the length of the slope-out (400 mm).

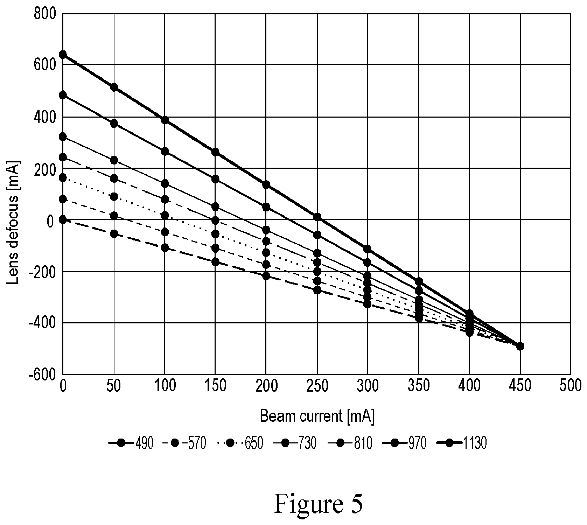

Figure 5 illustrates the results of focusing trials produced with the lens focus position evolving linearly during the slope-out methodology. In Figure 5, the slope-out proceeds from right to left (from 450 mA back to 0 mA), and various rates at which defocusing occurred are shown by the individual lines, which progressively range from 490 (bottom line) up to 1130 (top line). The change in defocusing from 450 mA to 0 mA has the effect of moving the focus position of the electron beam from under-focused (focal position in the bulk of the material as per steady state welding) forwards. Therefore, for the low lens current trial (490 mA) the focal position of the electron beam is essentially at the surface of the material at the end of the slope-out, while for the higher lens current trials the beam becomes over-focused (focal point ahead of material surface). The higher the lens current the sooner the beam focal point moves from inside the material to a distance away from the material surface. In some embodiments, the defocusing positions may be between +2 to 4 times the initial steady-state welding defocusing positions depending on material, gun geometry, and power.

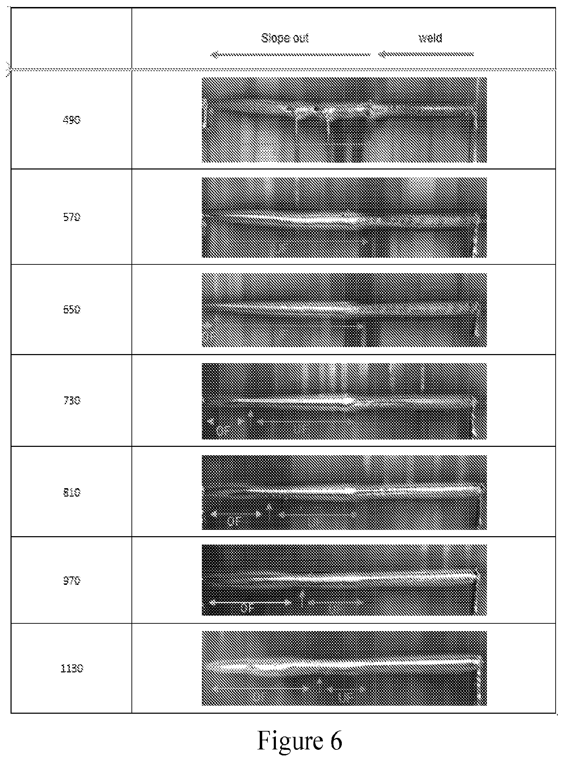

Figure 6 illustrates photographs comparing the visual appearance of the welds produced during slope-out for various defocusing trials of Figure 5, which were done on as a bead-on-plate basis. Similarly, welding proceeds from right to left following a 100 mm long steady-state weld, which is shown to the right (shown by the "weld" arrow at the top) and with the slope-out methodology starting where (shown by the "Slope out" arrow at the top to the left of the "weld" arrow). The vertical arrows in each respective illustration of the welds identifies the point at which the electron beam is focused on the surface of the workpiece. The portion of the slope-out weld during which the beam was under-focused is illustrated by the horizontal "UF" range (shown by the UF arrows), and the portion of the slope-out weld during which the beam was over-focused is illustrated by the horizontal "OF" range (shown by the OF arrows).

Everything prior to (or to the right of) the Slope out arrow was under-focused and everything after over-focused (*i.e.,* beam max power density is outside the material, gun side). In the case of 1130 mA condition, the weld started to exhibit weld crown sagging, therefore no more trials were conducted. The low lens current trial (490mA) relates to the general case where during the slope-out the focal position returns to 0. The fact that the weld tapers at the end of the slope shows that the beam is effectively focused at the surface at the end of the slope (shown by an arrow). As can be seen, the weld melt pool is unstable and drips at the end during the slope.

Increasing the defocusing value during the slope-out at +570, +650, +730, +810 and +970 mA greatly improved the visual appearance of the slope-out region. At +570 mA, the melt pool was not stable and crown sagging was noted. For this situation, the focal point was again located towards the end of the slope. As the defocus value increased, however, the point where the beam focal point was exactly on the material crown surface appears earlier during the slope-out (shown by the arrow). This is visible through a narrowing of the weld crown. In the case of 1130 mA condition, the weld started to exhibit crown sagging, therefore no more trials were conducted. This shows that the initial rate of defocusing was better with +1130 but it is too much and leads to sagging, which illustrates that in some embodiments, a non-linear defocusing rate for the slope-out methodology may be preferred, such as 2 linears or more.

Manual ultrasonic testing (UT) was performed to evaluate defects. With this process, the parameter set with (-490) +970 mA slope focus was the condition that yielded the least defects. In addition, this slope-out condition produced the weld with the best visual appearance. Based on these results this parameter set was selected for subsequent investigations, which are described below.

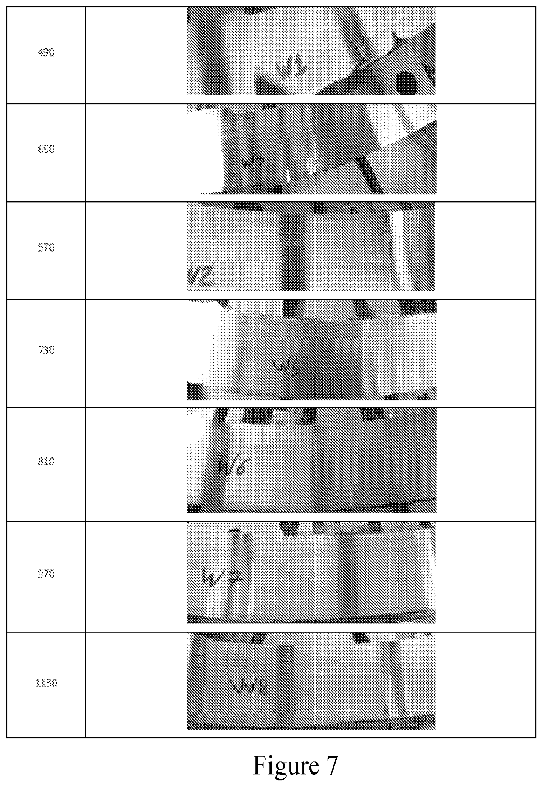

Figure 7 illustrates photographs of longitudinal slices of the welds of Figure 6. As the slope-out weld was vertically overlapping with the original or initial weld in the slope-out region, it was necessary to inspect the top welds and then mill material away to reach the next weld below it. Through sequential machining, it was possible to reach the weld zone and visually observe any defects as shown in Figure 7.

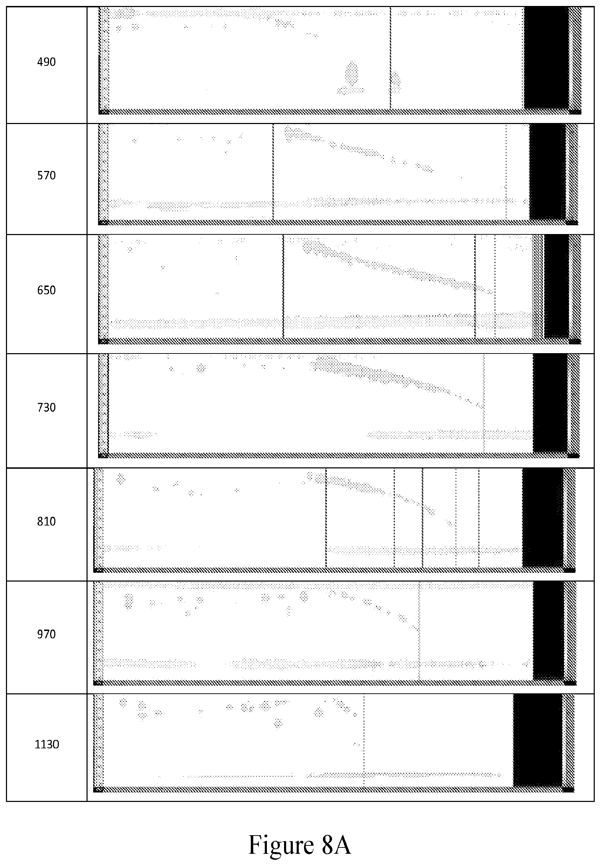

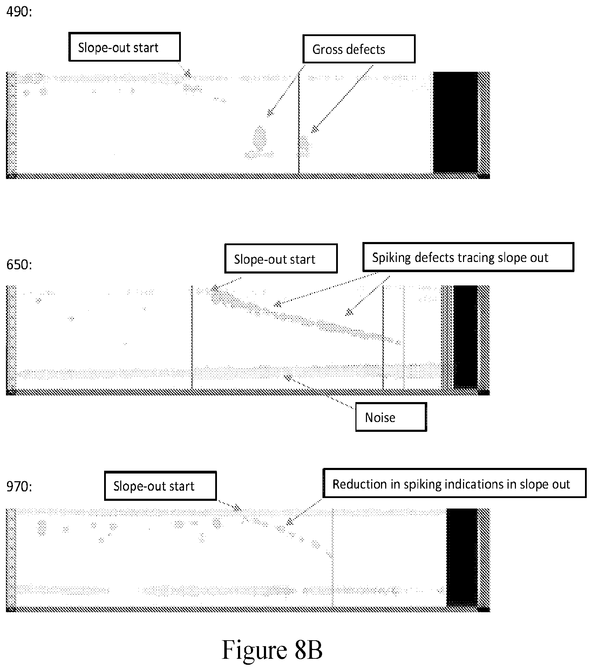

Figure 8A illustrates phased array ultrasonic inspection (PAUT) graphs for the slope-out welds of Figure 6. It should be appreciated that the horizontal markings extending across most of the horizontal portion of the graphs is noise. The sloped portions represent the slope-out regions. Figure 8B illustrates the phased array ultrasonic inspection (PAUT) graphs for certain of the graphs of Figure 8A. For three of the welds of Figure 8 (welds conducted at 490, 650, and 970mA), Figure 8B identifies the start of the slope-out portion (identified by the "Slope-out start" arrows) and various defects (identified by the arrows associated with the specifically noted defect). Table 2 records the defect information as a function of welding input parameters:

**Table 2. Defects Identified from UT (for the defocusing trials)**

| Parameters | Weld length (Steady state) | Slope length | Welding defocus | Welding end focus | Defect types | Position last defect |
|---|---|---|---|---|---|---|
| [] | mm | mm | mA | mA | Open cavity | mm |
| 490 | 100 | 400 | -490 | -490+490=0 | Pores/spiking | 320 |
| 570 | 100 | 400 | -490 | -490+570=80 | Pores/spiking | 435 |
| 650 | 100 | 400 | -490 | -490+650=160 | Pores/spiking | 420 |
| 730 | 100 | 400 | -490 | -490+730=240 | Pores/spiking | 410 |
| 810 | 100 | 400 | -490 | -490+810=320 | Pores/spiking | 382 |
| 970 | 100 | 400 | -490 | -490+970=480 | Pores/spiking | 342 |
| 1130 | 100 | 400 | -490 | -490+1130=640 | Pores/spiking | 285 |

Two defect types were noted. Pores, generally situated at the onset of the slope-out (see the circle on Figure 6 at 650), were observed. Also, spiking defects were observed following the weld fusion line, which is the interface where the slope-out weld is on top of the original weld and can be seen in Figure 6 as the upwardly sloping "line" proceeding from right to left. Spiking defects are represented as a sudden increase in penetration of the electron beam beyond the average penetration line.

As highlighted on Figures 8A and 8B and Table 2, the spiking defects seemed to diminish as the defocus value increased. Consequently, the spiking defects were almost clear by the 1130 mA condition. This seems to show that the beam in an over-focused configuration does not suffer from spiking defects as much as in the "under-focused" configuration. With specific reference to Figure 8B, as the focus position shifts from 490 to 970, the gross defect moves to smaller spiking events. In addition, the frequency and severity of spiking reduces as focus position shifts.

Based on previous results, several welds were carried out using strategies that increased the effective degassing time. Degassing during welding helps to avoid porosity and shrinkage type defects and also suppresses spiking defects. These strategies included increasing the slope length (effectively slowing the slope-out methodology) and increasing keyhole cavity size by using of wider oscillation parameters. Reducing the welding speed increased the time for degassing but also resulted in defective welds and, therefore, this approach was not pursued.

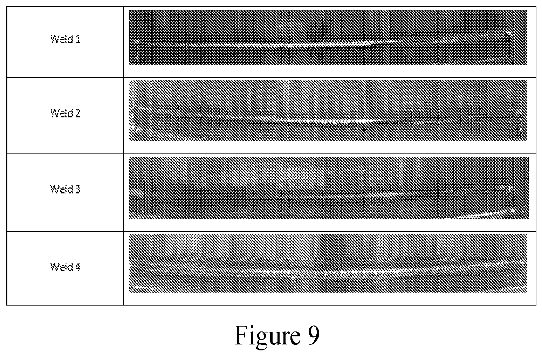

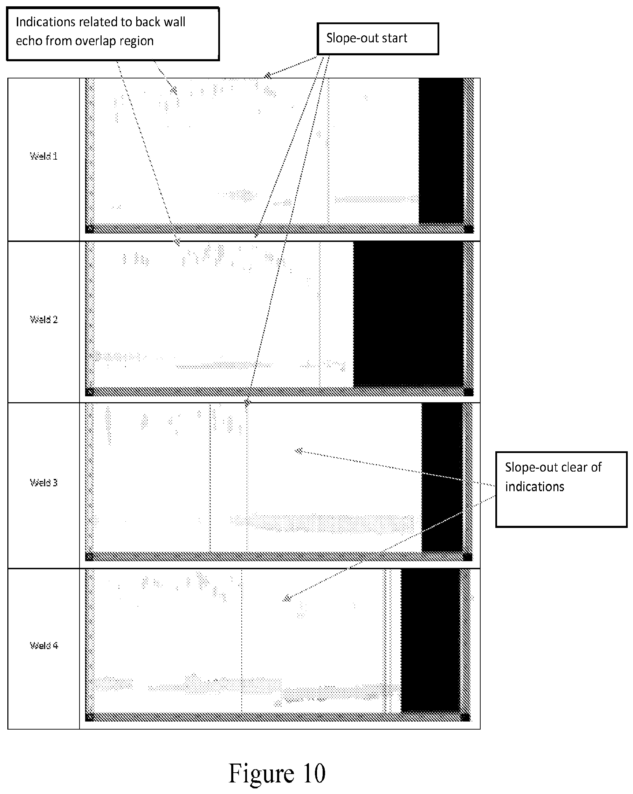

Figure 9 illustrates photographs comparing the visual appearance of multiple welds produced during degassing tests. Figure 10 illustrates phased array ultrasonic inspection (PAUT) graphs for the slope-out welds of Figure 9. Table 3 provides a list of weld parameters studied.

**Table 3. Details of Weld Trials (used to assess slope length and beam oscillation)**

| Parameters | V | I | Welding defocus | Welding end focus | Oscillation welding | Oscillation slope | Slope length |
|---|---|---|---|---|---|---|---|
| [] | kV | mA | mA | mA | mm/mm/Hz | mm/mm/Hz | mm |
| Weld 1 | 60 | 450 | -490 | 480 | 2/1/501 | 2/1/501 | 800 |
| Weld 2 | 60 | 450 | -490 | 480 | 2/1/501 | 3/1/501 | 800 |
| Weld 3 | 60 | 450 | -490 | 480 | 2/1/501 | 4/1/501 | 800 |
| Weld 4 | 60 | 450 | -490 | 480 | 2/1/501 | 4/2/501 | 800 |

Weld 1 was a repeat of weld 970mA from the tests described above but with a longer slope length (800mm versus 400mm above). It was evident that the spiking defects were still present but were quite reduced (see Figure 10, weld 1). Weld 2 included an added modification where the beam oscillation was increased to 3x1mm. As can be seen from Figure 10, the phased array ultrasonic inspection results appeared similar to one another for welds 1 and 2.

It was deemed that the increase to 3mm beam oscillation across 800mm was too slow. Therefore, for weld 3 the beam oscillation was increased to 4x1mm. As can be seen from the phased array ultrasonic inspection results in Figure 10, weld 3, there was one small pore defect left at the start of the slope out region, otherwise the slope-out was completely defect free. This was similar for weld 4, where the increase in oscillation was applied to both dimensions of the beam (4x2mm oscillation).

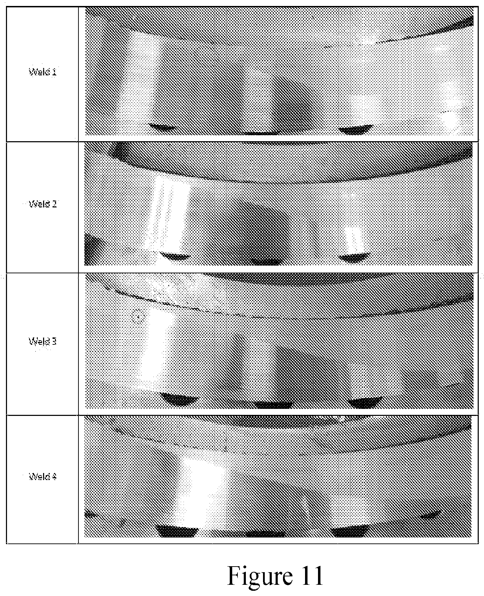

Figure 11 illustrates photographs of longitudinal slices of the welds of Figure 9. These highlight the machined surface of the slope-outs. Some defects are visible on the photographs as indicated by the circles in weld 1 and weld 3. Weld 1 shows a spiking defect, and weld 3 shows a pore (approximately 3 mm diameter). Despite sequential cutting at 0.2 mm increments, the spiking defects were so fine in scale that they were difficult to observe.

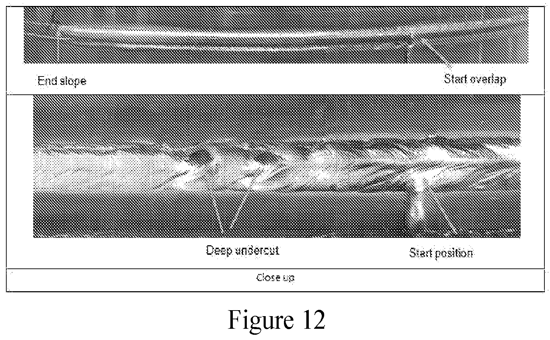

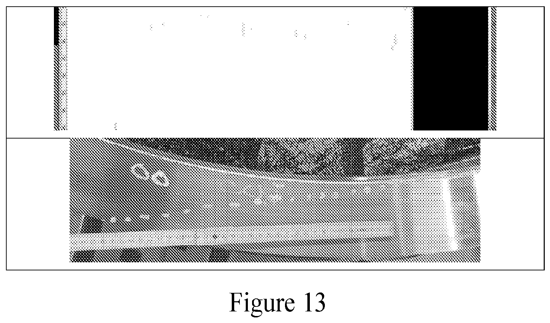

Figure 12 illustrates a photograph of the slope-out region of a full circumferential weld. Figure 13 illustrates the phased array ultrasonic inspection (PAUT) graph of the slope-out weld of Figure 12 and a longitudinal slice of the weld of Figure 12. The weld shown in Figure 12 is the equivalent of weld 3 above and was generated by performing a full-diameter weld, which lasted 70 minutes, around the entire diameter of the 1960mm OD 80mm wall thickness ring, followed by the 800mm long slope. The phased array ultrasonic inspection graph of Figure 13 indicates that the slope-out is free from defects. The longitudinal slice of Figure 13 is marked to show how the electron beam was extracted or defocused during the slope-out methodology.

The S355 steel behaved differently to SA508 with respect to electron beam welding characteristics. For the same parameters, the S355 material resulted in a much flatter crown and a more pronounced root. This can be seen by the amount of undercutting on the weld face. This undercutting was also visible at the start of the overlap where it was more pronounced. Except from the two undercut points showed in Figures 12 and 13, the electron beam weld slope-out did not contain any defects.

Additional experiments have been conducted using rings made from SA508 Grade3, which is a low-alloy steel. A first series of bead-on-plate welds were performed over an approximate total length of 500mm, which was comprised of 100mm of steady state welding followed by ~400mm of slope-out welding. The welding parameters are as shown in Table 4:

**Table 4. Welding Parameters**

| Parameters: | V (kV) | I (mA) | Speed (mm/s) | Electron Optical Monitoring (ELO) focus (mA) | Welding defocus (mA) | Slope end Defocus (mA) | Oscillation (mm/mm/Hz) |
|---|---|---|---|---|---|---|---|
| Steady-state welding | 60 | 450 | 2.00 | 2520 | -490 | | 1/3/501 |
| Slope-out welding | 60 | 450 | 2.00 | 2520 | -490 | -490+defocus | 2/1/501 |

During the slope-out welding, the welding current was reduced from the steady state welding condition (450 mA) to 0 mA linearly over the length of the slope out (400 mm for these trials). These trials aim to assess the impact of changing the focal position of the electron beam weld as the current is reducing. Five slope-out trial welds were performed to assess the influence of reducing the welding power from the initial maximum steady state condition all the way to 0 mA at the end of the slope-out.

The primary parameter assessed during the welding trials was the welding defocus parameter as shown in Table 5. Increasing the defocussing parameter (from +490 to +1290 mA) effectively means that the focal length of the beam is moving further away from workpiece surface over the same slope-out length. In other words, the focal point is moving from the material towards the EB gun at a quicker rate, as described above.

**Table 5. Focusing Trial Conditions (with resulting indication type and position volume from PAUT assessment)**

| Defocussing parameter | Steady State Weld length | Slope length | Welding defocus | Welding end focus | Indications | Position of last defect |
|---|---|---|---|---|---|---|
| | mm | mm | mA | mA | N/A | mm |
| 490 | 100 | 400 | -490 | +490 | Pores | 350 |
| 730 | 100 | 400 | -490 | +730 | Spiking | 360 |
| 970 | 100 | 400 | -490 | +970 | Spiking (reduced) | 270 |
| 1130 | 100 | 400 | -490 | +1130 | Pores/spiking | 300 |
| 1290 | 100 | 400 | -490 | +1290 | Pores/loss of crown | 350 |

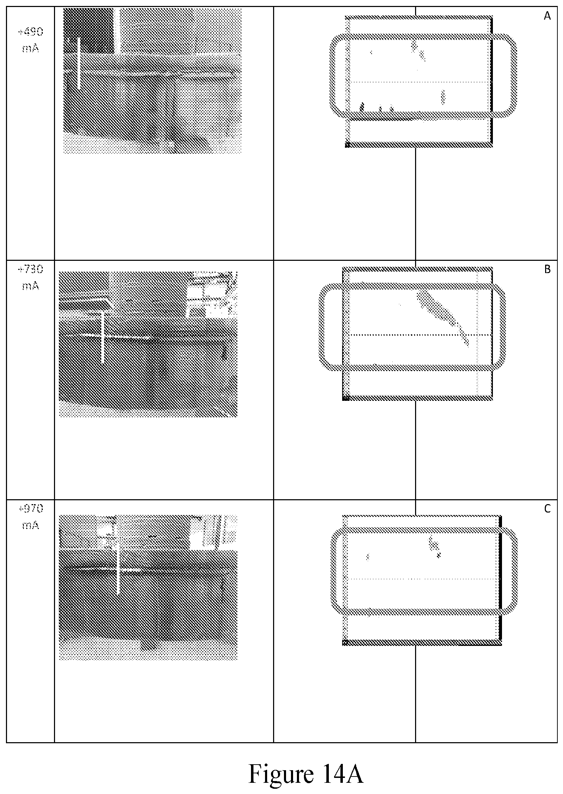

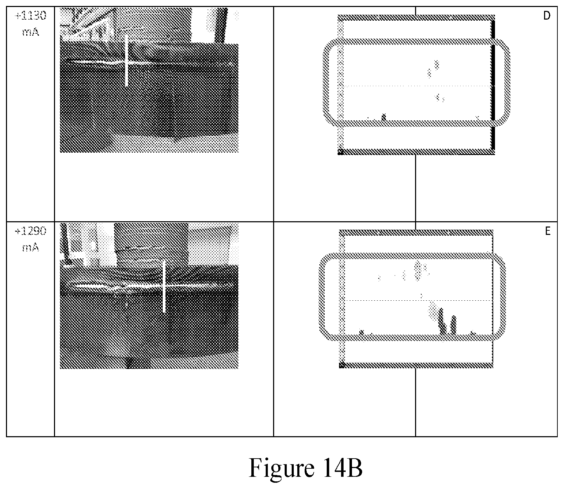

Figures 14A and 14B illustrate the results from the additional experiments conducted using rings made from SA508 Grade 3. These figures include the visual appearance of the five trial welds and the corresponding PAUT scan for volumetric assessment. The vertical line on each picture of the weld indicates a narrowing of the weld bead, which designates a sharp focus position corresponding to the beam focus on the surface of the workpiece material. A box is superimposed on each of the PAUT scans to show the weld. Each row is identified A-E and by the amount of defocus.

The visual appearance of the weld during slope-out was a key indicator with respect to weld quality. The +490 mA defocussing parameter resulted in a general loss of crown region immediately at the point where the steady state welding changed to the slope-out (see Figure 14A, row A). Loss of weld crown was also observed for the slope-out that featured the largest defocussing (+1290 mA), this occurred nearer the end of the slope out region. Both the +730 mA and +970 mA defocussing conditions produced very stable welds (from a visual appearance perspective). The sharp focus positions shown by the respective vertical lines on each photograph suggests that for +730 mA and +970 mA the focus evolution is relatively stable for the SA508 Grade 3 substrate material.

The PAUT scans further confirm this with +490 mA, +1130 mA, +1290 mA showing rejectable pores/cavity type indications. However, the +730mA condition shows an improvement but still includes spiking flaws noted from the PAUT scan. The +970mA condition resulted in the best PAUT results, with a small region corresponding to spiking type flaws noted. Table 5 highlights these results as well.

A second set of bead-on-plate trials used the promising +970 mA condition (from above) to assess increasing slope-out distance and also includes application of a change in the beam oscillation pattern (from horizontal to vertical). The details of these trials are recorded in Table 6:

**Table 6. Second Set of Bead-on-Plate Slope Out Trials (with indication type and position)**

| Defocussing parameter | Steady State Weld length | Slope length | Welding defocus | Welding end focus | Indications | Position of last flaws |
|---|---|---|---|---|---|---|
| | mm | mm | mA | mA | | mm |
| 970 | 100 | 400 | -490 | +490 | Spiking | 250 |
| 970 | 100 | 800 | -490 | +730 | Spiking | 470 |
| 970 | 100 | 800 | -490 | +970 | Spiking | 470 |
| 970 | 100 | 1600 | -490 | +1130 | Defect free | N/A |

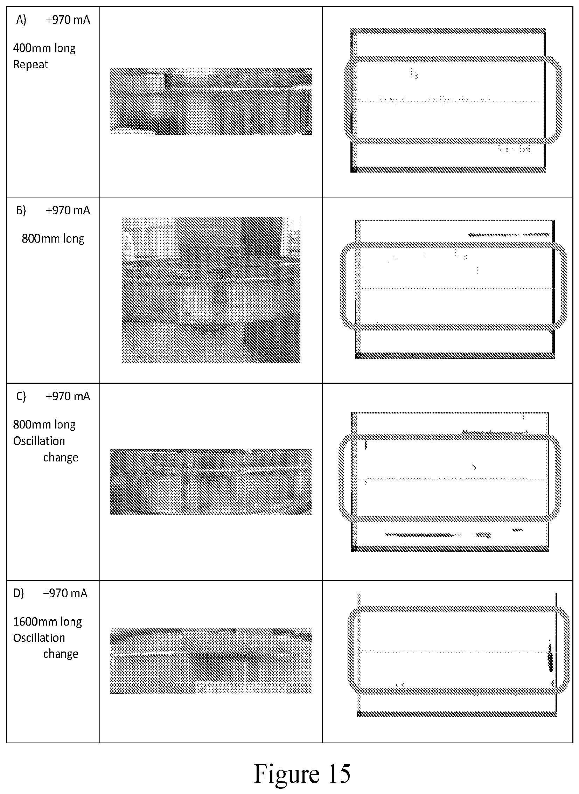

Figure 15 illustrates the results from the second set of bead-on-plate trials. This figure includes the visual appearance of the welds and PAUT inspection results. A box is superimposed on each of the PAUT scans to show the weld. The first slope-out weld (A) is effectively a repeat of the initial weld and presented a very similar visual appearance. The second slope-out weld (B) effectively increased the slope length from 400 to 800 mm while maintaining all other process parameters. The PAUT scan from this weld showed a decrease in the severity of the spiking flaws, indicating that increasing the slope-out length was beneficial. Note if this weld was assessed to ASME V criteria the spiking flaws would be well below reportable indication size.

The third slope-out trial (C) presents the situation where the beam oscillation was transitioned from a full penetration oscillation (horizontal) to a partial penetration oscillation pattern (vertical). The slope out length was maintained the same as the previous condition (slope out length = 800 mm). The PAUT scan reveals an additional improvement in the quality of the slope out region. Again, under ASME V criteria, this weld would be considered defect free.

The fourth slope-out trial (D) maintained the oscillation change, and further increased the slope out length from 800 to 1600 mm. The results from this weld were excellent with the PAUT results indicating that the slope out was clean and completely free of any defects.

It should be appreciated that the results suggest that slope-out length is indeed a very important factor in preventing the entrapment of pores/defects. Furthermore, the application of the oscillation change (from horizontal to vertical) reduced the instances of spiking.

A complete welding slope-out procedure was developed for the welding of a 2/3-scale reactor pressure vessel project. Table 7 presents the welding parameters. This slope-out procedure was applied to actual thick section weld joints produced from SA508 Grade 3.

**Table 7. Steady State Welding and Slope-out Conditions**

| Parameters | Section length | Beam power | Welding defocus | Beam oscillation |
|---|---|---|---|---|
| [] | mm | mA | mA | mm/mm/Hz |
| Welding | As required | 450 | -490 | 1/3/501 |
| Slope step 1 | 266.66 | 300 | -490+323 | 3/1/501 |
| Slope step 2 | 533.33 | 800 | -490+970 | 5/1/501 |

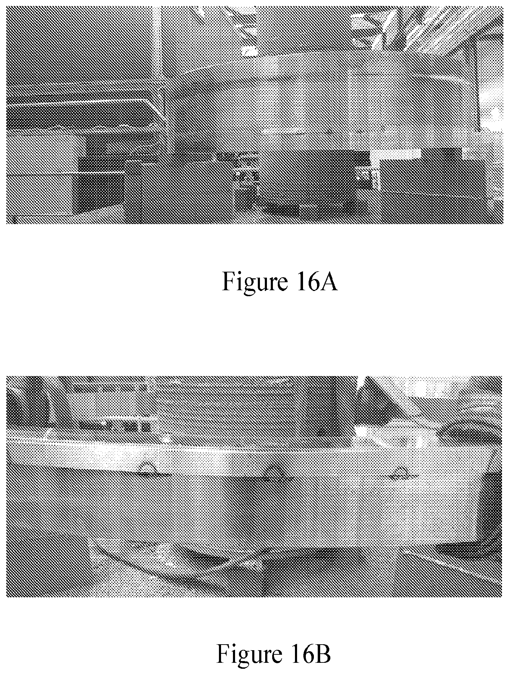

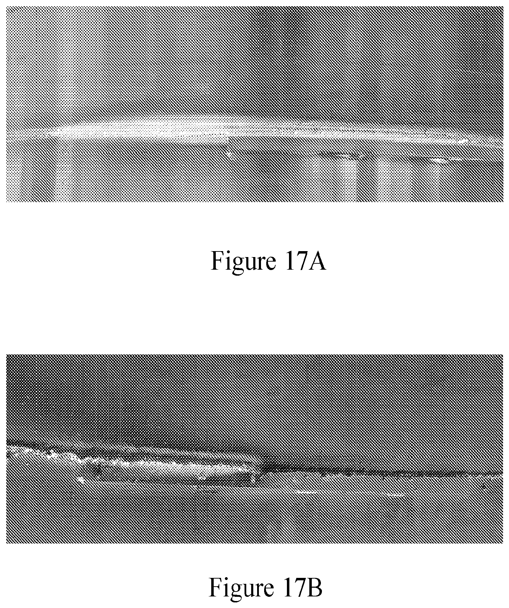

A first weld (Test Ring Weld 1) was carried out by butting two 150 mm tall SA508 Grade 3, Class 1 forged rings together. Both mating rings were sectioned from the same forging. Figures 16A and 16B show photographs of the ring welding setup for welding the two 150 mm tall SA508 Grade 3, Class 1 forged rings (Test Ring Weld 1), which includes 5 mm start and stop fronting and backing bars (not shown) to control weld drip. Figures 17A and 17B show photographs of the completed slope region of the weld from this welding of two 150 mm tall SA508 Grade 3, Class 1 forged rings (Test Ring Weld 1).

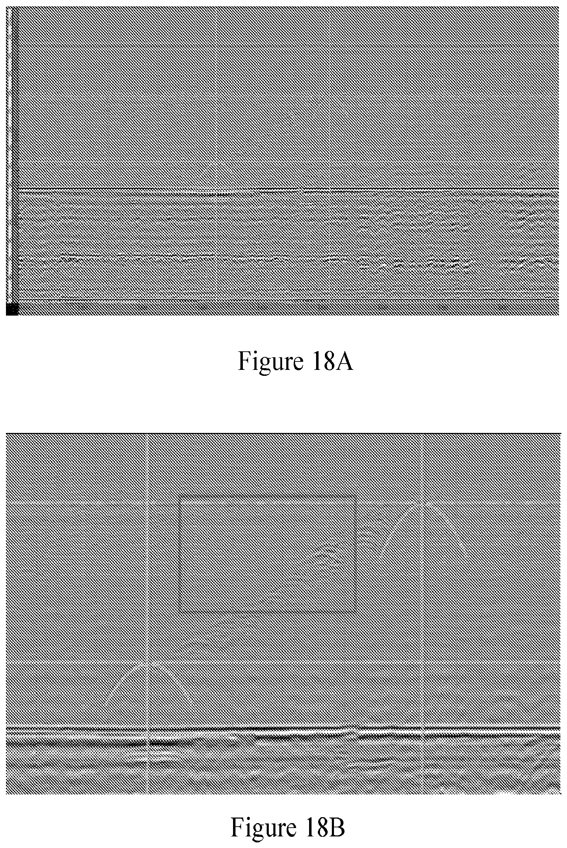

Figures 18A and 18B show ToFD inspection results from the slope-out region of Test Weld 1. The results suggested that there were a series of indications that trace the line of the slope-out, effectively representing the penetration of the electron beam as it moves out and away from the material. These indications begin at the back wall (0 mm position and inside diameter) and continue to the outside diameter. Note the results presented only cover the 0mm (back wall) position through to 42mm from the outside surface. Figure 18B shows the section marked within the box. It is important to note that at this stage the indications were not sized via ToFD.

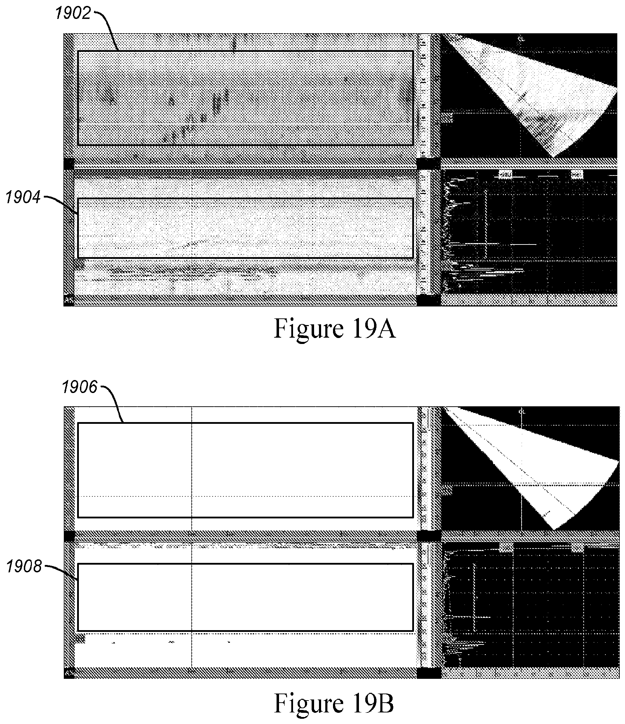

The ToFD scan was supported by PAUT scans across the same slope-out region. Figures 19A and 19B illustrate the PAUT scans for Test Weld 1. The boxes 1902, 1904, 1906, 1908 indicate the weld. Figure 19A shows the unfiltered date collected, and Figure 19B shows the filtered date in line with the AME detection requirements. The as-collected data (Figure 19A), which employed high amplitude signal gain, suggests a number of indications were present that effectively trace the slope-out line. Application of ASME V inspection criteria (Figure 19B), however, demonstrates the indications to be well below the reportable size. This suggests the slope-out region was acceptable and free of reportable indications. It is worth noting that no reportable indications were observed in the remainder of the weld during inspection (start up and steady state).

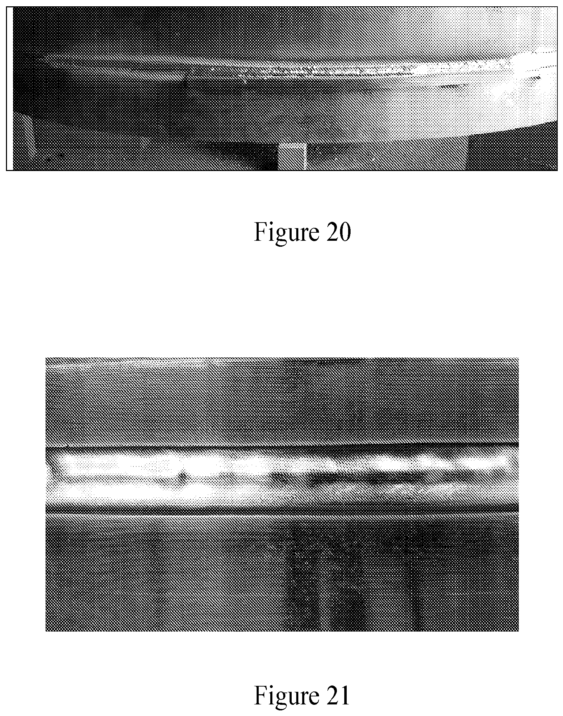

A second weld (Test Ring Weld 2) was carried out as a direct repeat of weld 1 by butting two 150 mm high sections of an SA508 Grade 3 Class 1 rings (again from the same forging). The goal was to determine if the weld slope-out was repeatable using another set of forgings. A similar inspection procedure was used for the slope in and slope out in Test Ring Weld 2. Figure 20 shows the resulting weld of butting two 150 mm high sections of an SA508 Grade 3 Class 1 rings (Test Ring Weld 2) and is also visually similar. Both the ToFD and PAUT presented almost identical results for Test Ring Weld 2 compared to Test Ring Weld 1. Figure 21 shows a cosmetic welding pass applied to Test Ring Weld 2. The cosmetic pass was successful in reducing the occurrence of underfill on the weld face.

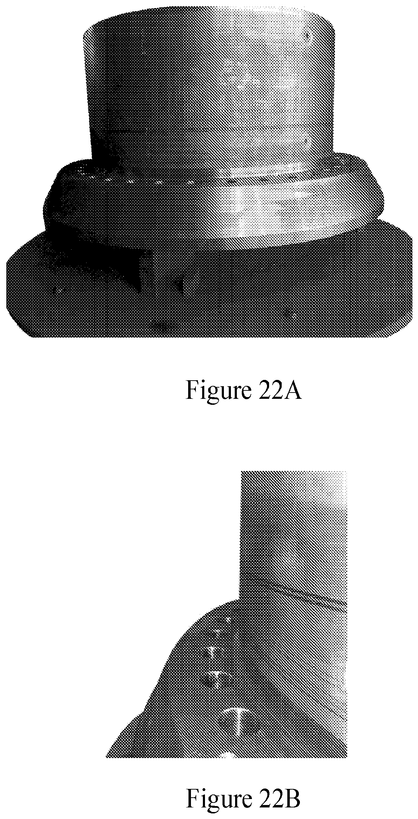

A third weld was done as a mock-up of the lower section of a NuScale reactor pressure vessel lower assembly, which consists of a forged flange, shell cylinder, and lower dished head. The shell/flange weld consists of a forged flange welded to a forged shell (outside diameter 1780 mm). The joint thickness was 80 mm and includes an integrated 5 mm step on the inside and outside dimeter to act as weld support (analogous to the fronting bar). The flange was centered using a DTI, and joint flatness was also corrected. Figures 22A and 22B illustrate the set-up for the shell/flange weld.

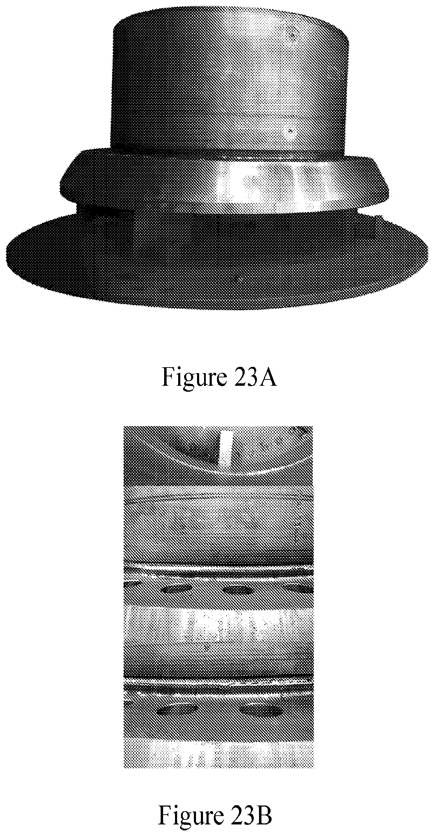

The weld program was semi-automated with seam tracking and an automated tacking procedure. This activity took 15 minutes. The weld was then completed in 50 minutes (beam on time). Figures 23A and 23B show photographs of the completed weld, and a close-up of the slope out area for the shell/flange weld, respectively. The full operation from set-up to completion of the weld took 2 hours.

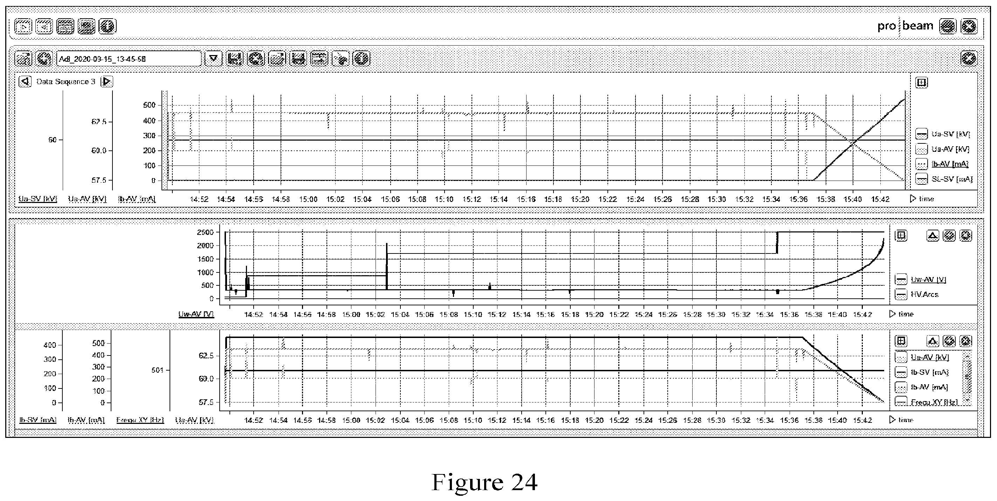

Figure 24 shows the machine process trace for the shell/flange weld, which records the voltage and current during electron beam welding. Some high voltage instabilities of maximum 3kV are shown, yielding some arcing errors. However, it should be stressed that weld proceeded as planned.

The ID and OD of the shell/flange were machined to remove the weld crown and root as well as the backing bars from the front and rear locations. This was required to facilitate full NDT of the weld. For machining, up to 5mm from both sides (ID and OD) was removed to clean the weld. After machining, dye penetrant inspection (DPI) was performed.

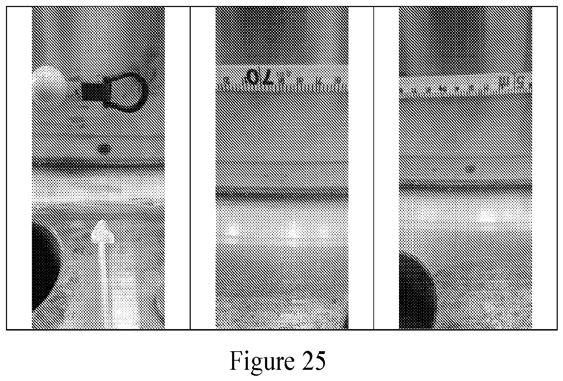

Figure 25 shows photographs of the DPI indications for the shell/flange weld. DPI showed no indications on the ID but the OD presented four isolated regions corresponding to under-fill. These regions required subsequent hand dressing up to a depth of 4mm to clear. The largest indication corresponded to the slope in the region that had an under-fill at the onset of the slope in/ slope out overlap. There is no evidence to suggest these regions related to the high voltage/beam current event as recorded from the k2000 trace. These features would benefit from using a cosmetic pass, as previously described.

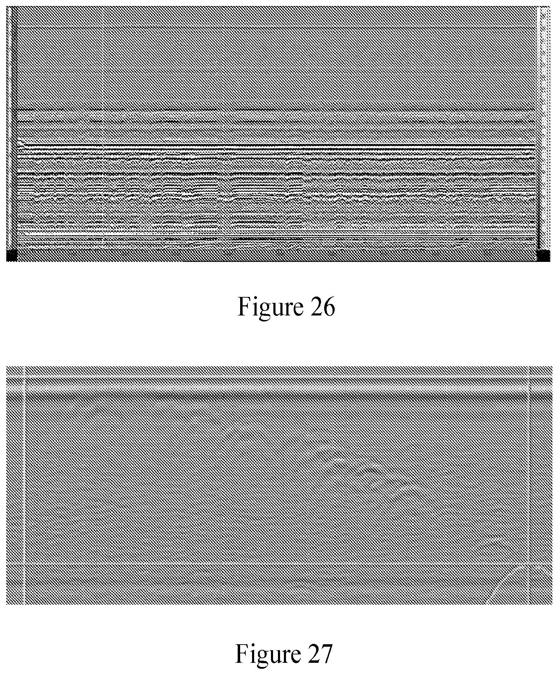

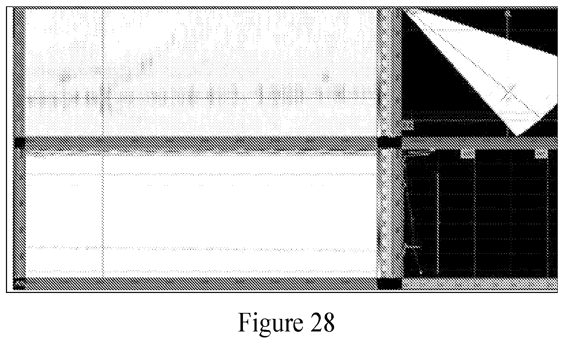

Figure 26 shows the ToFD data from the shell/flange weld, and Figure 27 shows the PAUT results from the shell/flange weld. The same volumetric NDT approach was adopted for the shell/flange weld as previously described, which combines both ToFD and PAUT. For the shell/flange weld Figures 26 and 27 only show the scans from the slope out region. The remainder of the weld presented no recordable indications. The ToFD data from the shell/flange weld show that indications were identical in the slope region as previously observed in the welds 1 and 2. Note the scan was taken from the inside diameter hence the indications present in the opposite direction to the previous results. Considering the PAUT results, the scan revealed no recordable indications during the slope out portion of the shell/flange. Figure 28 shows the phased array graph of the shell/flange weld. Once the ASME V criteria were applied to the scan, the trace was very clean as noted in the bottom of Figure 28. These results confirm that the slope out procedure is transferable, as the shell/flange weld is from a different heat of SA508 Grade 3 material.

Various embodiments of the invention have been described above. However, it should be appreciated that alternative embodiments are possible within the scope defined by the appended claims.

## Claims

1. A method for welding two components together, comprising:
welding two components using electron beam welding comprising an electron beam, wherein said welding is performed over a first period of time with the electron beam focal position or focal plane being within the bulk of the material being welded;
**characterised by** the following steps:
adjusting a focus of the electron beam from within the bulk of the two components to above the two components continuously and throughout a second period of time; and
adjusting at the start of the second period a shape of an oscillation pattern of the electron beam within the second period of time;
wherein the second period of time starts within the first period of time and wherein the first period of time and the second period of time end concurrently.

2. The method of claim 1, wherein adjusting the focus of the electron beam comprises modifying the lens focus position so that it changes at a linear rate of change.

3. The method of claim 1, wherein adjusting the focus of the electron beam comprises modifying the lens focus position so that it changes at a non-linear rate of change.

4. The method of any preceding claim, wherein adjusting the oscillation pattern of the electron beam oscillation comprises widening the oscillation pattern.

5. The method of any preceding claim, wherein the oscillation pattern comprises an elliptical pattern and wherein said adjusting the oscillation pattern comprises elongating the elliptical pattern perpendicular to a direction of said welding.

6. The method of claim 5, further comprising:
elongating the elliptical pattern in the direction of said welding.

7. The method of any preceding claim, further comprising:
reducing a current of the electron beam continuously during the second period of time.

8. A method for circumferential welding of two components using electron beam welding, comprising:
forming a circumferential weld using an electron beam that extends 360 degrees between two components with the electron beam focal position or focal plane being within the bulk of the material being welded;
forming a slope-out weld portion that overlaps the circumferential weld by a predetermined length;
**characterised by** the following steps:
adjusting a focus of the electron beam from within the bulk of the two components to above the two components continuously during said forming of the slope-out weld portion; and
adjusting at the start of the second period a shape of an oscillation pattern of the electron beam during said forming of the slope-out weld portion.

9. The method of claim 8, wherein the oscillation pattern comprises an elliptical pattern and wherein said adjusting the oscillation pattern comprises elongating the elliptical pattern perpendicular to a direction of said welding at the start of said forming the slope-out weld portion.

10. The method of claim 9, further comprising:
elongating the elliptical pattern in the direction of said welding.

## Patentansprüche

1. Verfahren zum Schweißen zweier Bauteile, das Folgendes umfasst:
Schweißen zweier Bauteile unter Verwendung von Elektronenstrahlschweißen, das einen Elektronenstrahl umfasst, wobei das Schweißen über einen ersten Zeitraum mit der Elektronenstrahl-Fokalposition oder Fokalebene innerhalb des Volumens des Materials, das geschweißt wird, durchgeführt wird;
**gekennzeichnet durch** die folgenden Schritte:
Einstellen eines Fokus des Elektronenstrahls von innerhalb des Volumens der beiden Bauteile zu oberhalb der beiden Bauteile kontinuierlich und durchgehend während eines zweiten Zeitraums; und
Einstellen zu Beginn des zweiten Zeitraums einer Form eines Schwingungsmusters des Elektronenstrahls innerhalb des zweiten Zeitraums;
wobei der zweite Zeitraum innerhalb des ersten Zeitraums beginnt und wobei der erste und der zweite Zeitraum gleichzeitig enden.

2. Verfahren nach Anspruch 1, wobei das Einstellen des Fokus des Elektronenstrahls das Modifizieren der Linsenfokalposition derart umfasst, dass sie sich mit einer linearen Änderungsrate ändert.

3. Verfahren nach Anspruch 1, wobei das Einstellen des Fokus des Elektronenstrahls das Modifizieren der Linsenfokalposition derart umfasst, dass sie sich mit einer nichtlinearen Änderungsrate ändert.

4. Verfahren nach einem vorstehenden Anspruch, wobei das Einstellen des Schwingungsmusters der Elektronenstrahlschwingung das Verbreitern eines Schwingungsmusters umfasst.

5. Verfahren nach einem vorstehenden Anspruch, wobei das Schwingungsmuster ein elliptisches Muster umfasst, und wobei das Einstellen des Schwingungsmusters das Verlängern des elliptischen Musters senkrecht zu einer Richtung des Schweißens umfasst.

6. Verfahren nach Anspruch 5, das weiter Folgendes umfasst:
Verlängern des elliptischen Musters in der Richtung des Schweißens.

7. Verfahren nach einem vorstehenden Anspruch, das weiter Folgendes umfasst:
kontinuierliches Reduzieren eines Stroms des Elektronenstrahls während des zweiten Zeitraums.

8. Verfahren zum umlaufenden Schweißen zweier Bauteile unter Verwendung von Elektronenstrahlschweißen, das Folgendes umfasst:
Bilden einer umlaufenden Schweißnaht unter Verwendung eines Elektronenstrahls, der sich 360 Grad zwischen zwei Bauteilen erstreckt, wobei sich die Fokalposition oder die Fokalebene des Elektronenstrahls innerhalb des Volumens des Materials, das geschweißt wird, befindet;
Bilden eines auslaufenden Schweißnahtabschnitts, der die umlaufende Schweißnaht um eine vorgegebene Länge überlappt;
**gekennzeichnet durch** die folgenden Schritte:
kontinuierliches Einstellen eines Fokus des Elektronenstrahls von innerhalb des Volumens der beiden Bauteile zu oberhalb der beiden Bauteile während des Formens des auslaufenden Schweißnahtabschnitts; und
zu Beginn des zweiten Zeitraums Einstellen einer Form eines Schwingungsmusters des Elektronenstrahls während des Bildens des auslaufenden Schweißnahtabschnitts.

9. Verfahren nach Anspruch 8, wobei das Schwingungsmuster ein elliptisches Muster umfasst und wobei das Einstellen des Schwingungsmusters das Verlängern des elliptischen Musters senkrecht zu einer Richtung des Schweißens zu Beginn des Bildens des auslaufenden Schweißnahtabschnitts umfasst.

10. Verfahren nach Anspruch 9, das weiter Folgendes umfasst:
Verlängern des elliptischen Musters in der Richtung des Schweißens.

## Revendications

1. Procédé de soudage de deux composants ensemble, comprenant :
le soudage de deux composants en utilisant le soudage par faisceau d'électrons comprenant un faisceau d'électrons, dans lequel ledit soudage est effectué sur une première période de temps, la position focale ou le plan focal du faisceau d'électrons se trouvant dans la masse du matériau soudé ;
le procédé étant **caractérisé par** les étapes suivantes :
le réglage de la focalisation du faisceau d'électrons depuis la masse des deux composants jusqu'au-dessus des deux composants de manière continue et pendant toute une seconde période de temps ; et
le réglage au début de la seconde période de la forme d'un modèle d'oscillation du faisceau d'électrons dans la seconde période de temps ;
dans lequel la seconde période de temps commence dans la première période de temps et dans lequel la première période de temps et la seconde période de temps se terminent simultanément.

2. Procédé selon la revendication 1, dans lequel le réglage de la focalisation du faisceau d'électrons comprend la modification de la position de focalisation de la lentille de manière à ce qu'elle change à un taux de changement linéaire.

3. Procédé selon la revendication 1, dans lequel le réglage de la focalisation du faisceau d'électrons comprend la modification de la position de focalisation de la lentille de manière à ce qu'elle change à un taux de changement non linéaire.

4. Procédé selon une quelconque revendication précédente, dans lequel le réglage du modèle de l'oscillation du faisceau d'électrons comprend l'élargissement du modèle d'oscillation.

5. Procédé selon une quelconque revendication précédente, dans lequel le modèle d'oscillation comprend un modèle elliptique et dans lequel ledit réglage du modèle d'oscillation comprend l'allongement du modèle elliptique perpendiculairement à une direction de ladite soudure.

6. Procédé selon la revendication 5, comprenant en outre :
l'allongement du modèle elliptique dans la direction de ladite soudure.

7. Procédé selon une quelconque revendication précédente, comprenant en outre :
la réduction en continu du courant du faisceau d'électrons pendant la seconde période.

8. Procédé de soudage circonférentiel de deux composants en utilisant le soudage par faisceau d'électrons, comprenant :
la formation d'une soudure circonférentielle en utilisant un faisceau d'électrons qui s'étend sur 360 degrés entre deux composants, la position focale ou le plan focal du faisceau d'électrons se trouvant dans la masse du matériau soudé ;
la formation d'une portion de soudure d'inclinaison vers l'extérieur qui chevauche la soudure circonférentielle sur une longueur prédéterminée ;
le procédé étant **caractérisé par** les étapes suivantes :
le réglage en continu de la focalisation du faisceau d'électrons depuis la masse des deux composants jusqu'au-dessus des deux composants pendant ladite formation de la portion de soudure d'inclinaison vers l'extérieur ; et
le réglage au début de la seconde période de la forme d'un modèle d'oscillation du faisceau d'électrons pendant ladite formation de la portion de soudure d'inclinaison vers l'extérieur.

9. Procédé selon la revendication 8, dans lequel le modèle d'oscillation comprend un modèle elliptique et dans lequel ledit réglage du modèle d'oscillation comprend l'allongement du modèle elliptique perpendiculairement à une direction de ladite soudure au début de ladite formation de la portion de soudure d'inclinaison vers l'extérieur.

10. Procédé selon la revendication 9, comprenant en outre :
l'allongement du modèle elliptique dans la direction de ladite soudure.
